(19) Europäisches Patentamt
European Patent Office
Office européen des brevets

(11) Veröffentlichungsnummer: **0 024 655**
**A2**

(12) # EUROPÄISCHE PATENTANMELDUNG

(21) Anmeldenummer: 80104844.8

(22) Anmeldetag: 14.08.80

(51) Int. Cl.$^3$: **C 09 B 67/24**
C 09 B 67/42

(30) Priorität: 22.08.79 CH 7654/79

(43) Veröffentlichungstag der Anmeldung:
11.03.81 Patentblatt 81/10

(84) Benannte Vertragsstaaten:
CH DE FR GB LI NL

(71) Anmelder: CIBA-GEIGY AG
Patentabteilung Postfach
CH-4002 Basel(CH)

(72) Erfinder: Hugelshofer, Paul, Dr.
Donnerbaumweg 29
CH-4132 Muttenz(CH)

(72) Erfinder: Bruttel, Beat, Dr.
Ob den Reben 5
CH-4461 Böckten(CH)

(74) Vertreter: Berg, Wilhelm, Dr. et al,
Dr. Berg, Dipl.-Ing. Stapf, Dipl.-Ing. Schwabe, Dr. Dr.
Sandmair Mauerkircherstrasse 45
D-8000 München 80(DE)

(54) **Granulate von Metallkomplexfarbstoffen und Verfahren zu ihrer Herstellung.**

(57) Verfahren zur Herstellung von Granulaten von Metallkomplexfarbstoffen zusammen mit einem anionischen Tensid, nichtionogenem Tensid, Stärkeabbauprodukt und/oder einem anorganischen Salz aus der Gruppe der Ammonium- bzw. Alkali- und sauren Alkalisulfate, -carbonate, -phosphate, -nitrate oder Lithiumchlorid sowie gegebenenfalls weiteren Zusätzen mittels Wirbelschichtgranulierung.

Bevorzugte weitere Zusätze sind hydrotrope Mittel, Staubbindemittel und/oder weitere anorganische bzw. organische Salze.

Die erhaltenen Granulate weisen eine verbesserte mechanische Stabilität und Rieselfähigkeit, geringere Staubbildung und ein wesentlich höheres Schüttgewicht gegenüber den überlicherweise hergestellten Pulvern bzw. Zerstäubungsgranulatformen bei gleichzeitiger guter Benetzbarkeit und Löslichkeit sogar in kaltem Wasser auf.

EP 0 024 655 A2

Croydon Printing Company Ltd.

CIBA-GEIGY AG
Basel/Schweiz

# GRANULATE VON METALLKOMPLEXFARBSTOFFEN UND VERFAHREN ZU IHRER HERSTELLUNG

Die Erfindung betrifft ein Verfahren zur Herstellung von Granulaten von Metallkomplexfarbstoffen in einem Wirbelbett, sowie, als industrielles Erzeugnis, die gemäss dem Verfahren erhaltenen Granulate.

In der DE-OS 27 16 478 ist das Granulieren von wässerlöslichen Farbstoffen aus einem wässrigen Slurry gegebenenfalls in Gegenwart von Siedesalz in einem Wirbelbett beschrieben.

Es wurde nun gefunden, dass beim Verwenden von spezifischen Zusätzen, man überraschenderweise Granulate von den Metallkomplexfarbstoffen gemäss vorliegender Erfindung im Wirbelbett erhalten kann, die eine verbesserte mechanische Stabilität und Rieselfähigkeit, geringere Staubbildung und ein wesentlich höheres Schüttgewicht gegenüber den üblicherweise hergestellten Pulvern bzw. Zerstäubungsgranulatformen bei gleichzeitiger guter Benetzbarkeit und Löslichkeit sogar in kaltem Wasser aufweisen.

Die Erfindung betrifft somit ein Verfahren zur Herstellung von Granulaten von Metallkomplexfarbstoffen, indem man eine wässrige Zubereitung, enthaltend

A) mindestens einen, eine Sulfonsäure- oder Carbonsäuregruppe enthaltenden, Metallkomplexfarbstoff,

B) mindestens ein anionisches Tensid, nichtionogenes Tensid, Stärkeabbauprodukt und/oder ein anorganisches Salz aus der Gruppe der Ammonium- bzw. Alkali- und sauren Alkalisulfate, -carbonate, -phosphate, -nitrate oder Lithiumchlorid sowie gegebenenfalls weitere Zusätze auf ein Wirbelbett, enthaltend mindestens eine der Komponenten A, B oder der weiteren Zusätze sprüht.

Als weitere Zusätze verwendet man z.B. mindestens ein hydrotropes Mittel, ein Staubbindemittel und/oder ein weiteres anorganisches bzw. organisches Salz.

Gegenstand der Erfindung sind ferner die nach dem erfindungsgemässen Verfahren erhaltenen Farbstoffgranulate.

Bevorzugte anionische Tenside sind Kondensationsprodukte aromatischer Sulfonsäuren mit Formaldehyd wie Kondensationsprodukte aus Formaldehyd und Naphthalinsulfonsäuren oder aus Formaldehyd, Naphthalinsulfonsäure und Benzolsulfonsäure, oder ein Kondensationsprodukt aus Rohkresol, Formaldehyd und Naphthalinsulfonsäure, sowie vor allem Kondensationsprodukte aus Phenol-, Kresol- oder Naptholsulfonsäure und Formaldehyd oder Ligninsulfonate (Sulfit-Celluloseablauge) oder Oxyligninsulfonate, und insbesondere Kondensationsprodukte aus Naphthalinsulfonsäure und Formaldehyd. Bevorzugte Mengen der anionischen Tenside sind 5 bis 30 Gew.%, bezogen auf das Granulat.

Als nichtionogene Tenside, die verwendet werden können, kommen vor allem in Betracht:

Polyäthylenglykole mit einem Molekulargewicht von vorzugsweise 200 bis 1000;

Mischpolymerisate aus Aethylenoxid und Propylenoxid (sog. Blockpolymerisate);

Umsetzungsprodukte aus Fettsäuren mit 8 bis 22 Kohlenstoffatomen und Aminen oder Hydroxyalkylaminen, wie z.B. Cocosfettsäureamid, Oelsäurediäthanolamid oder Cocosfettsäureäthanolamid;

Fettalkoholpolyglykoläther, besonders solche mit mehr als 20 Mol Aethylenoxid, wie Cetyl- oder Stearylalkohol veräthert mit 25 Mol Aethylenoxid, Stearyl- oder Oleylalkohol veräthert mit 80 Mol Aethylenoxid und Oleylakohol veräthert mit 20 bis 80 Mol Aethylenoxid, sowie Phenoläther, wie p-Nonylphenol veräthert mit 9 Mol Aethylenoxid, Ricinolsäureester mit 15 Mol Aethylenoxid und Hydroabietylakohol veräthert mit 25 Mol Aethylenoxid.

Besonders vorteilhaft haben sich Anlagerungsprodukte erwiesen, aus z.B. 5 bis 50 Mol, vorzugsweise 10 bis 30 Mol Alkylenoxiden, insbesondere von Aethylenoxid, wobei einzelne Aethylenoxideinheiten durch substituierte Epoxide, wie Styroloxid und/oder Propylenoxid, ersetzt sein können, angelagert an höhere Fettsäuren oder an gesättigte oder ungesättigte Alkohole, Mercaptane oder Amine mit 8 bis 20 Kohlenstoffatomen oder an Alkylphenole oder Alkylthiophenole, deren Alkylreste mindestens 7 Kohlenstoffatome aufweisen, beispielsweise Kondensationsprodukte aus Fettsäuren (z.B. Oelsäure oder Ricinolsäure), oder aliphatischen Alkoholen (z.B. Octanol oder Decylalkohol), oder gegebenenfalls substituierten Phenolen (z.B. Alkylphenol, wie Nonylphenol) mit Aethylenoxid, vorzugsweise Kondensationsprodukte aus einer aliphatischen Fettsäure und 10 bis 30 Mol Aethylenoxid, insbesondere aus Oelsäure und 20 Mol Aethylenoxid. Bevorzugte Mengen der nichtionogenen Tenside sind 1 bis 30 Gew.%, bezogen auf das Granulat.

Erfindungsgemäss verwendbare Stärkeabbauprodukte sind Verbindungen, die mindestens fünf Hydroxygruppen pro Molekül enthalten, wie Sorbit, Hydratdextrose, Glukose, Milchzucker, Mannit, Mannose oder vorzugsweise Dextrin. Sie werden vorzugsweise in Mengen von 1 bis 40 Gew.%, bezogen auf das Granulat, verwendet.

Als Beispiele geeigneter erfindungsgemäss verwendbaren anorganischen Salze sind genannt: Lithiumchlorid, Natriumcarbonat, Natriumhydrogencarbonat, Mono-, Di- oder Trinatriumphosphat, Natriumtripolyphosphat, Polyphosphate, Natriumnitrat, Ammoniumsulfat, Kaliumsulfat, Lithiumsulfat, Natriumhydrogensulfat und vorzugsweise Natriumsulfat. Bevorzugte Mengen sind 1 bis 40 Gew.%, bezogen auf das Granulat.

Die erfindungsgemässe Granulate können noch als weitere Zusätze beispielsweise auch folgende anorgnische bzw. organische Salze enthalten: Natriumchlorid und/oder Natriumacetat. Sie werden vorzugsweise in Mengen von 1 bis 30 Gew. % bezogen auf das Granulat verwendet.

Als erfindungsgemäss verwendbare hydrotrope Mittel sind solche wie Harnstoff oder die in der DE-OS 28 02 327 beschriebenen Hilfsmittelmischungen mit verstärkter Hydrotropiewirkung zu nennen.

Das hydrotrope Mittel wird vorzugsweise in Mengen von 1 bis 30 Gew.%, bezogen auf das Granulat, verwendet.

Als Staubbindemittel kommen die üblichen in Frage wie z.B. Paraffinöl und Mineralöle, gegebenenfalls emulgiert mit geeigneten Emulgatoren z.B. Fettsäure(-alkohol)-Aethylenoxidaddukten, insbesondere ein Gemisch aus Mineralöl bzw. Mineralölsulfonsäure und einem Emulgator oder aus Paraffinöl und einem nichtionischen Emulgator. Man verwendet vorzugsweise 1 bis 10 Gew.% Staubbindemittel, bezogen auf das Granulat.

Als erfindungsgemässe sulfonsäure- bzw. carbonsäuregruppenhaltige Metallkomplexfarbstoffe kommen beispielsweise 1:1 oder 1:2 Metallkomplexe von Azo- oder Azomethinfarbstoffen oder metallisierte Phthalocyanine, insbesondere Kupfer- und Nickelphthalocyanine, in Betracht. Bei den 1:1 und 1:2 -Metallkomplexen handelt es sich vorzugsweise um 1:1-Nickelkomplexe, 1:1 Kobaltkomplexe, 1:1-Kupferkomplexe, 1:1-Chromkomplexe, 1:1-Eisenkomplexe oder um symmetrische oder asymmetrische 1:2-Kobaltkomplexe, 1:2-Eisenkomplexe oder 1:2-Chromkomplexe von insbesondere o-Carboxy-o'-hydroxy-, o-Hydroxy-o'-amino- oder o,o'-Dihydroxyazofarbstoffen des Benzol-azo-benzol-, Naphthalin-azo-napthalin-, Benzol-azo-naphthalin-, Benzol-azo-pyrazolon-, Benzol-azo-pyridon- oder Benzol-azoacetessigsäureamid-Typs, wobei diese Gruppierungen unsubstituiert oder auch substituiert sein können. Als Substituenten kommen z.B. in Betracht: Carboxyl, Sulfonsäure, gegebenenfalls substituierte Sulfonsäureamide oder Sulfone, Halogen oder Nitro.

Bei diesen Farbstoffen kann es sich um Mono-, Dis- oder Polyazofarbstoffe handeln, wobei diese auch als Salze von Aminen, z.B. von Rhodamin B, Isopropylamin oder von methylverzweigten Alkylaminen mit z.B. 5 bis 21 Kohlenstoffatomen ($H[-C(CH_3)_2-CH_2-]_{1-5}CH_2NH_2$) vorliegen können. Beim vorliegenden Verfahren verwendet man die Metallkomplexe von sulfonsäuregruppenhaltigen Azofarbstoffen vorzugsweise in Form ihrer Metallsalze, z.B. der Natrium-, Kalium- oder Magnesiumsalze.

Die erfindungsgemäss verwendbaren Kupfer- und Nickelphthalocyanine leiten sich von den üblichen Gemischen verschiedener Sulfonierungsgrade ab und enthalten vorzugsweise 2 bis 3 oder auch 4 sulfatierte Sulfonsäure-β- oder -γ-hydroxyalkylamidgruppen, können daneben aber auch einzelne Halogene und einzelne Sulfonsäureamidgruppen enthalten, wobei diese Sulfonsäureamidgruppen am Stickstoff unsubstituiert oder substituiert sein können, beispielsweise durch nieder Alkyl, wie Methyl, Aethyl, Propyl, Butyl, oder niedere Hydroxyalkylgruppen, wie 2-Hydroxyäthyl, 2-Hydroxypropyl, 3-Hydroxypropyl.

Die Farbstoffe können gegebenenfalls auch in Mischungen miteinander oder gegebenenfalls mit Farbstoffen von einem anderen Typ, z.B. mit nicht metallisierten Azo-Farbstoffen vorliegen.

Die Metallkomplexfarbstoffe können auch faserreaktive Gruppen enthalten.

Geeignete faserreaktive Gruppen sind z.B. heterocyclische Gruppen oder eine Acylgruppe von einer Carbonsäure, wobei diese Gruppen mindestens ein abspaltbares Halogenatom aufweisen. Es handelt sich beispielsweise um die folgenden Gruppen: s-Triazinylreste, die am Triazinring ein oder zwei Halogenatome, wie Chlor-, Fluor- oder Bromatome tragen, Pyrimidylreste, die ein bis drei Halogenatome wie Chlor- und/oder Fluoratome bzw. eine oder zwei Arylsulfonyl- oder Alkansulfonylgruppen am Pyrimidinring tragen, Dichlorchinoxylinyl-, 2-Chlorbenzthiazolyl-, Chloracetylaminogruppen oder α,β-Dibrompropionylaminogruppen.

Desweiteren kommen als faserreaktive Gruppen z.B. noch in Frage Halogencyclobutan-, Mono- oder Bis-(γ-Halogen-β-hydroxypropyl)-aminogruppen, β-Halogenäthylsulfamidreste, β-Halogenäthoxygruppen, β-Halogenäthylmercaptogruppen, γ-Halogen-β-hydroxy-propylsulfamidreste, oder 2,3-Epoxypropylgruppen.

Die erfindungsgemäss verwendbaren sulfonsäure -bzw. carbonsäuregruppenhaltigen Metallkomplexfarbstoffe sind bekannt und können nach an sich bekannten Methoden hergestellt werden.

Die erfindungsgemässen Granulate enthalten 35 bis 90 Gew.%, vorzugsweise 50 bis 90 Gew. % mindestens eines, eine Sulfonsäure- oder Carbonsäuregruppen enthaltenden Metallkomplexfarbstoffes, 5 bis 60 Gew.% Hilfsmittelzusatz, bestehend aus 5 bis 50 Gew.% anionisches Tensid, nichtionogenes Tensid, Stärkeabbauprodukt und/oder anorganisches

Salz, und gegebenenfalls 1 bis 50 Gew. % hydrotropes Mittel, Staubbindemittel und/oder weiteres anorganisches bzw. organisches Salz, sowie 1 bis 15 Gew.% Restfeuchte; wobei die Gesamtmenge der Komponente B und weiteren Zusätze 5 bis 60 Gew.% beträgt. Die Prozentsätze sind jeweils auf das Gesamtgewicht der Granulate bezogen.

Die erfindungsgemässen Granulate werden vorzugsweise kontinuierlich in einer Wirbelschicht-Anlage, wie sie beispielsweise aus der DE-OS 2 231 445 bekannt ist,hergestellt, indem man in ein Wirbelbett kontinuierlich oder absatzweise die definitionsgemässe Zubereitung in Form einer Lösung, Suspension oder eines Gemisches einer Lösung und Suspension, enthaltend den Metallkomplexfarbstoff zusammen mit den genannten Zusätzen, einsprüht, unter Aufrechterhaltung des Wirbelbettes aus diesem kontinuierlich oder absatzweise körniges Material entnimmt. Das so entnommene Material wird dann vorzugsweise gesichtet, indem die Grobanteile mit einem Durchmesser grösser als 5 mm, gegebenenfalls nach Zerkleinerung sowie die Feinanteile mit einem Durchmesser kleiner als 0,1 mm wieder in die wässrige Zubereitung und/oder in das Wirbelbett kontinuierlich oder absatzweise zurückgeführt werden. Die Teilchen mit einer Grösse zwischen 0,1 und 5 mm stellen den bevorzugten Anteil der erfindungsgemässen Präparate dar und sind zur Verwendung als Farbstoffpräparate besonders geeignet. Zur Bereitung der wässrigen Zubereitung kann man die Synthese-Lösung bzw. -Suspension oder den aus der Farbstoffherstellung erhaltenen Presskuchen direkt mit den Zusätzen mischen und homogenisieren und anschliessend in das Wirbelbett sprühen. Gleichzeitig kann man mit der wässrigen Farbstoffzubereitung pulverförmige Zusätze in das Wirbelbett sprühen.

Man kann aber auch das Rohfarbstoff-Pulver und das Wasser, gegebenenfalls zusammen mit flüssigen Zusätzen, getrennt in das Wirbelbett geben.

Das Verfahren eignet sich auch für zerstäubungsgetrocknete Pulver, da damit eine Verbesserung des Staubverhaltens, des Schüttgewichts und der Rieselfähigkeit und vor allem des Lösungsverhaltens (Benetzung, Löslichkeit, auch in kaltem Wasser) gegenüber der zerstäubungsgetrockneten Ware erreicht wird.

Da die Synthesesuspensionen mit unterschiedlichem Trockengehalt ab Betrieb anfallen, ist es vorteilhaft beim Ansatz der Suspension auf einen höchstmöglichen Trockengehalt zu achten.

Man kann gegebenenfalls die Suspension z.B. durch Eindämpfen auf einen Feststoffgehalt von vorzugsweise ca. 15 bis 50 Gewichtsprozent konzentrieren.

Bei manchen Farbstoffen ist es vorteilhaft, den aus der Syntheselösung bzw. als Presskuchen erhaltenen Rohfarbstoff nach bekannten Methoden, z.B. in einer Sand- oder Mikrosolmühle nass zu mahlen.

In einer bevorzugten Ausführungsform wird eine wässrige Suspension bzw. Lösung, enthaltend einen definitionsgemässen Metallkomplexfarbstoff, Wasser und die definitionsgemässen Zusätze auf ein Wirbelbett, bestehend aus dem Endprodukt (Granulat) aufgedüst. Der Prozess kann gleichermassen ablaufen durch kontinuierliche Zuführung der besagten Suspension bzw. Lösung oder der trockenen Pulverform unter Zudüsung von Wasser enthaltend die Zusätze. Das entstehende Granulat wird aus dem Wirbelbett unter anschliessender Trennung von Grob- und Feinanteil, kontinuierlich abgezogen, wobei der Feinanteil und der Grobanteil, gegebenenfalls nach Zerkleinerung in die Suspension bzw. vorzugsweise in das Wirbelbett zurückgeführt wird.

Das Wirbelbett wird durch einen Gasstrom erzeugt, der vorzugsweise eine Eingangstemperatur von 35 bis 300° C aufweist, wobei die Temperatur im Wirbelbett vorteilhaft 50 bis 100° C beträgt.

Das Wirbelbett-Druckdifferenz (Δ p) beträgt dabei vorzugsweise 50 bis 150 mm Wassersäule (WS) und die Strömungsgeschwindigkeit 0,5 bis 3 m/sec.

Die Wirbelbett-Temperaturdifferenz (ΔT) liegt normalerweise im Bereich von 5 bis 15° C. Die Leistung kann je nach Apparatur und Produkt entsprechend angepasst werden. Vorteilhaft wird eine Apparatur mit 2,5 $m^2$ Siebbodenfläche verwendet, die mit einer Leistung von 100 bis 900 Liter pro Stunde flüssigen Zubereitung gefahren wird. Die angegebene Leistung wird durch Zugabe von entsprechenden Mengen pulverförmigen Ausgangsprodukt, bzw. gemäss den verschiedenen Möglichkeiten der Zuspeisung nach folgendem Flussdiagramm ebenfalls erreicht.

Man erhält nach diesem Verfahren staubarme bis staubfreie Granulate von einer Korngrösse zwischen 50 und 2000 µm, vor allem zwischen 100 und 2000 µm, die sich auszeichnen durch eine einheitliche formstabile Korngrösse und relativ hohes Schüttgewicht, durch eine hohe mechanische Festigkeit, durch ihre Rieselfähigkeit und durch ihr gutes Löseverhalten, wie Benetzung und Dispergierbarkeit. Insbesondere bilden sie beim Transport und bei der Verarbeitung keinen Staub. Diese Eigenschaft behalten sie auch beim Lagern über mehrere Monate, z.B. 6 bis 12 Monate, bei einer Temperatur von -10° C bis +50° C.

Das folgende Flussdiagramm gibt einen einfachen Ueberblick über die verschiedenen Ausführungsformen des erfindungsgemässen Verfahrens.

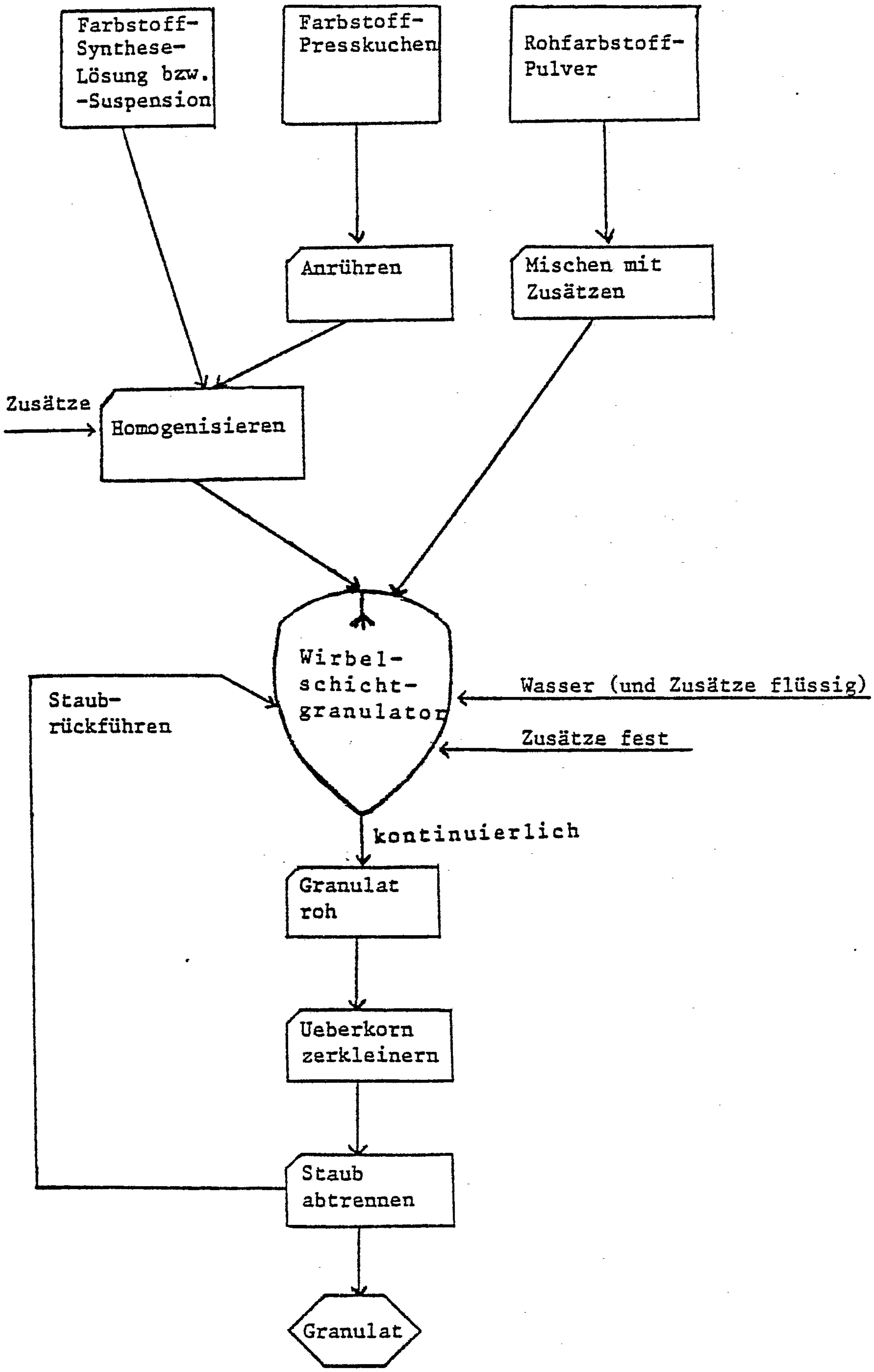
Farbstoff-Synthese-Lösung bzw. -Suspension
Farbstoff-Presskuchen
Rohfarbstoff-Pulver
Anrühren
Mischen mit Zusätzen
Zusätze
Homogenisieren
Wirbel-schicht-granulator
Staub-rückführen
Wasser (und Zusätze flüssig)
Zusätze fest
kontinuierlich
Granulat roh
Ueberkorn zerkleinern
Staub abtrennen
Granulat

In den nachfolgenden Beispielen, welche die Erfindung erläutern, bedeuten Teile Gewichtsteile. Die Temperaturen sind in Grad Celsius angegeben. WS bedeutet Wassersäule. Die Farbstoffe liegen vorzugsweise als Alkalisalz, vor allem als Natriumsalz vor. Die Bezeichnung staubarm bei den Präparaten bedeutet, dass praktisch keine Teilchen mit einer Grösse unter 50 µm vorhanden sind.

Beispiel 1: Eine wässrige hochdispergierte Zubereitung enthaltend ca. 11,3 % trockenen Rohfarbstoff der Formel

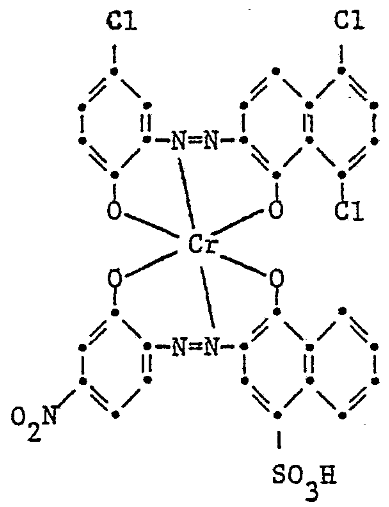

wird unter starkem Rühren mit ca. 15,9 % Natriumsulfat, bezogen auf den trockenen Rohfarbstoff, versetzt. Der pH-Wert der Suspension wird mit einer 10%igen Natriumhydroxidlösung auf 6,0 bis 7,5 eingestellt, und anschliessend mehrere Stunden durch starkes Rühren homogenisiert. Diese Suspension wird nun in eine Wirbelschicht aus Produktpulver gleicher Zusammensetzung wie der Trockenanteil der Suspension unter folgenden Bedingungen eingesprüht:

Zusammensetzung der Zubereitung:

11.3 % Rohfarbstoff
1.8 % Natriumsulfat
86.9 % Wasser

Lufteintrittstemperatur: 160°C
Ablufttemperatur: 75°C
Wirbelbett-Temperaturdifferenz ΔT: 10°C ± 2°C
Wirbelbett-Druckdifferenz Δp: 85 mm WS ± 5 mm
Strömungsgeschwindigkeit: 0,5 - 3 m/sec.

Als Wirbelbett vorgelegte Menge an pulverformiger Farbstoffzubereitung: ca. 100 $kg/m^2$.

Die in das Wirbelbett eingedüste Menge an wässriger Farbstoffzubereitung beträgt ca. 500 Liter/h (Leistung).

Noch vorhandener Feinanteil bzw. während des Verlaufs des Verfahrens entstehendes Feinpulver wird im nachgeschalteten Sichter abgeschieden und zur Nachagglomerierung rückgeführt.

Man erhält ein staubarmes, rieselfähiges und formstabiles Farbstoffgranulat mit hohem Schüttgewicht sowie guter Benetzbarkeit und Löslichkeit sogar in kaltem Wasser der Zusammensetzung:

73,9 % des obigen Farbstoffes,
22,1 % Natriumsulfat,
ca. 4 % Restfeuchte.

Dieses Granulat zeigt eine deutlich bessere Löslichkeit in kaltem Wasser sowie bessere Benetzbarkeit als das durch Zerstäubungstrocknung erhaltene Produkt derselben Zusammensetzung.

Beispiele 2 und 3: Verfährt man gemäss der Arbeitsweise des vorstehenden Beispiels 1, verwendet jedoch die in den folgenden Beispielen 2 und 3 genannten Komponenten unter ähnlichen Arbeitsbedingungen, so erhält man Granulate der in diesen Beispielen genannten Zusammensetzung, die ähnliche Eigenschaften aufweisen.

Beispiel 2: Farbstoff der in Beispiel 1 angegebenen Formel. Zusammensetzung der Zubereitung:

11,5 % Rohfarbstoff
1,1 % Natriumsulfat
ca. 0,7 % Dextrin
86,7 % Wasser
Lufteintrittstemperatur: 100°C
Ablufttemperatur: 75°C
Wirbelbett-Druckdifferenz Δp: 95 mm WS ± 5 mm

Leistung: ca. 500 Liter wässriger Zubereitung/h

Zusammensetzung des Farbstoffgranulats:

74 % Rohfarbstoff
17 % Natriumsulfat
ca. 5 % Dextin
4 % Restfeuchte

<u>Beispiel 3:</u> Farbstoffgemisch der 1:2 Co-Komplexe der Formeln

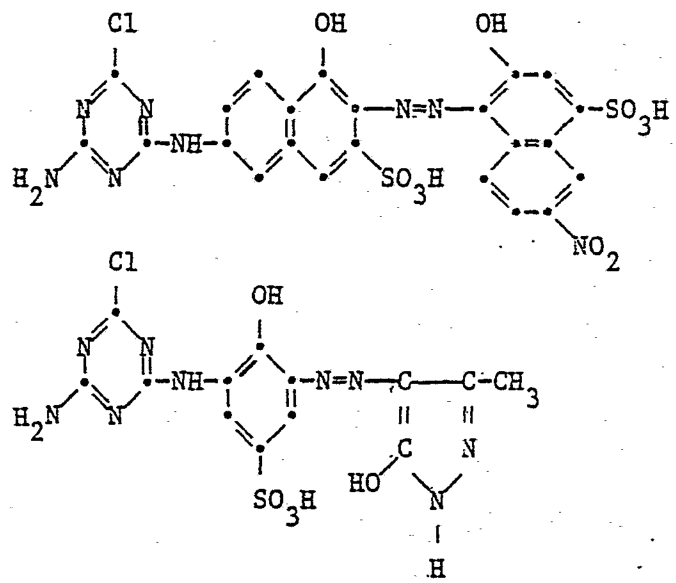

33 %

67 %

Zusammensetzung der Zubereitung:

15,8 % Rohfarbstoff
4 % Natriumsulfat
2,6 % Ligninsulfonat
1,8 % Kondensationsprodukt aus Oelsäure und 20 Mol Aethylenoxid
0,8 % Paraffinöl + nichtionogener Emulgator
75 % Wasser

Lufteintrittstemperatur: 150°C ± 5°C
Ablufttemperatur: 65°C
Wirbelbett-Druckdifferenz Δp: 90 mm WS ± 5 mm

Leistung: 650 Liter wässriger Zubereitung/h

Zusammensetzung des Farbstoffgranulats:

60 % Rohfarbstoff
15 % Natriumsulfat
10 % Ligninsulfonat
7 % Kondensationsprodukt aus Oelsäure und 20 Mol Aethylenoxid
3 % Paraffinöl + nichtionogenes Emulgator
5 % Restfeuchte

Beispiele 4 bis 32 Verwendet man anstelle der in den vorstehenden Beispielen verwendeten Metallkomplexfarbstoffe die in den folgenden Tabellen A bis D angegebenen Metallkomplexfarbstoffe, bei gleicher Arbeitsweise, so erhält man Granulate ähnlicher Zusammensetzung, die ähnliche Eigenschaften aufweisen.

In der Tabelle A sind 1:2-Komplexe aufgeführt, die 2 Moleküle des gleichen Farbstoffes an 1 Metallatom komplex gebunden, enthalten.

Tabelle A

| I | II | III | IV |
|---|---|---|---|
| Bsp. Nr. | Metall | Farbstoff | Farbton |
| 4 | Co | 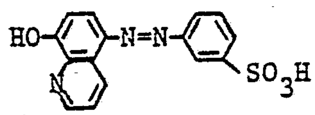 | Braun |
| 5 | Co | 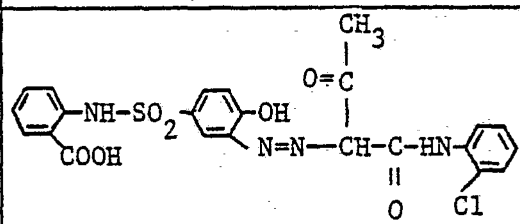 | Gelb |
| 6a | Co | 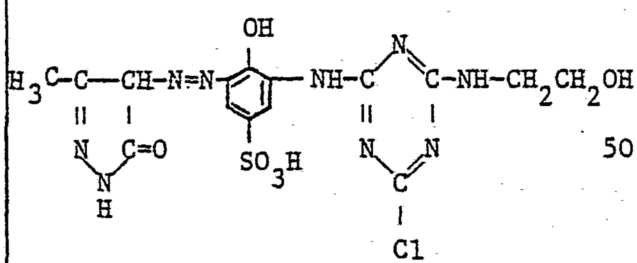 50 % | Braun |
| + | | | |
| 6b | Co | 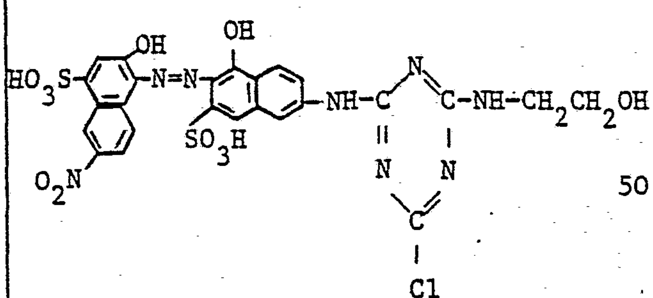 50 % | |

In der Tabelle B sind 1:2-Mischkomplexe aufgeführt, die je 1 Molekül eines Farbstoffes der Kolonne III und der Kolonne IV an 1 Metallatom der Kolonne II komplex gebunden enthalten.

Tabelle B

| I | II | III | IV | V |
|---|---|---|---|---|
| Bsp. Nr. | Metall | Farbstoff | Farbstoff | Farbton |
| 7 | Cr | 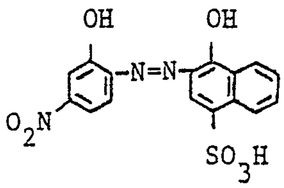 | 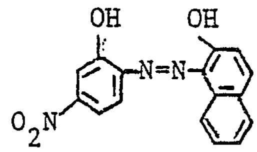 | Marine-blau |
| 8 | Cr | 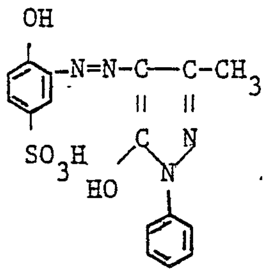 | 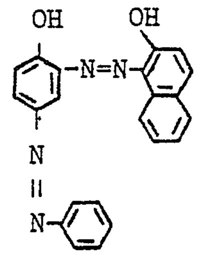 | Braun |
| 9 | Cr | 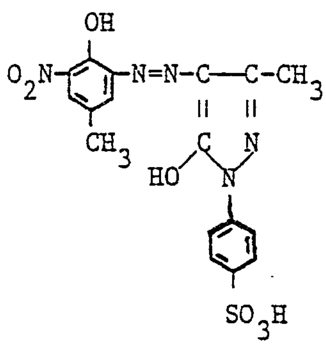 | 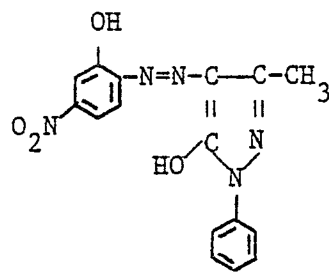 | Bordeaux |
| 10 | Fe | 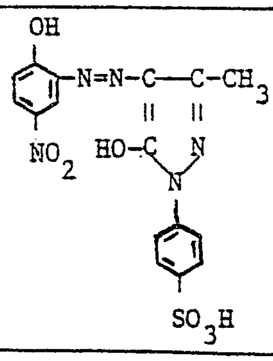 | 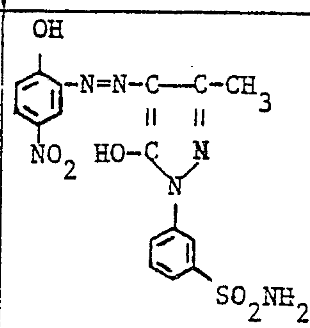 | Braun |
| 11 | Cr | 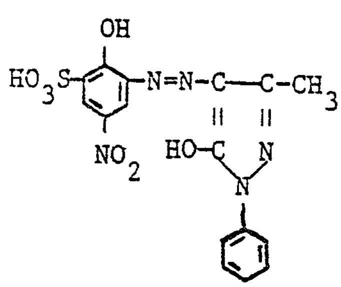 | 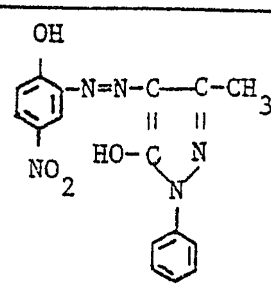 | Orange |

Tabelle B (Fortsetzung)

| I | | III | IV | V |
|---|---|---|---|---|
| Bsp. Nr. | Metall | Farbstoff | Farbstoff | Farbton |
| 12 | Cr | 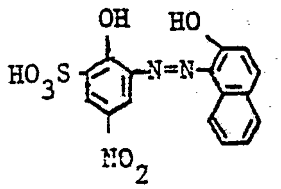 | 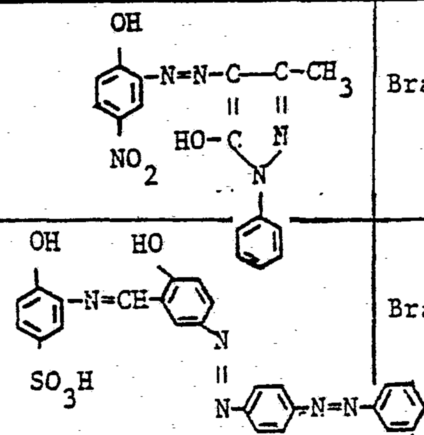 | Braun |
| 13 | Cr | 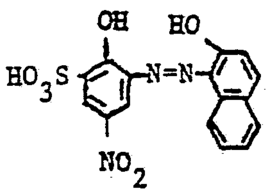 | | Braun |
| 14 | Cr | 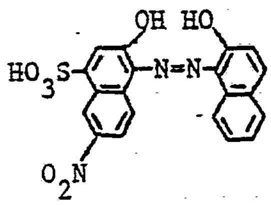 | 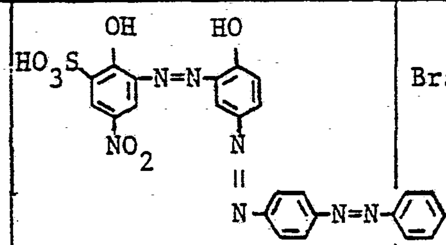 | Braun |
| 15 | Cr | 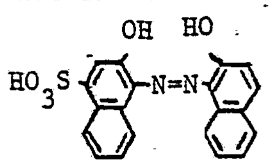 | 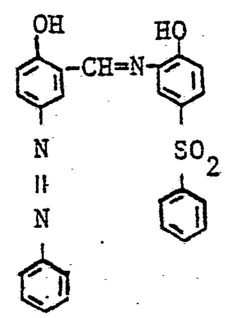 | Olive |
| 16 | Cr | 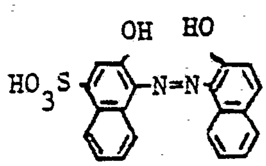 | 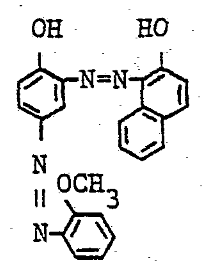 | Schwarz |
| 17 | Cr | 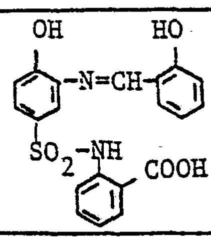 | 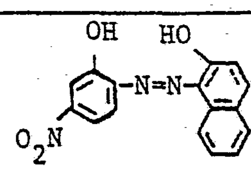 | Grün |

Tabelle B (Fortsetzung)

| I | II | III | IV | V |
|---|---|---|---|---|
| Bsp. Nr. | Metall | Farbstoff | Farbstoff | Farbton |
| 18 | Cr | 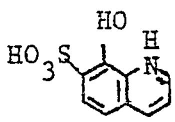 | 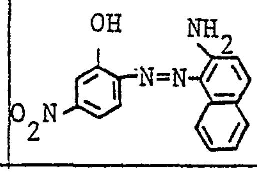 | Grün |

In der Tabelle C sind 1:1-Komplexe aufgeführt, die 1 Molekül des Farbstoffes an 1 Metallatom komplex gebunden, enthalten.

Tabelle C

| I | II | III | IV |
|---|---|---|---|
| Bsp. Nr. | Metall | Farbstoff | Farbton |
| 19 | Fe | 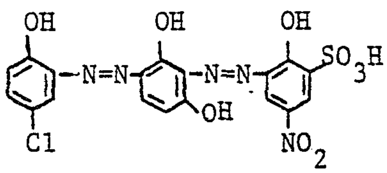 | Braun |
| 20 | Cr | 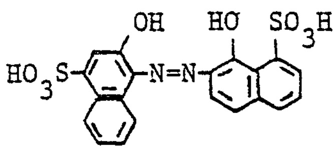 | Blau |
| 21 | Cr | 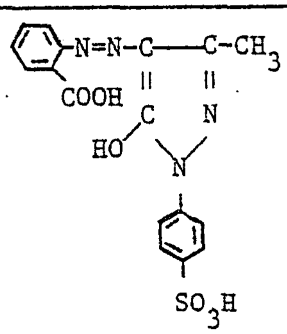 | Gelb |
| 22 | Cr | 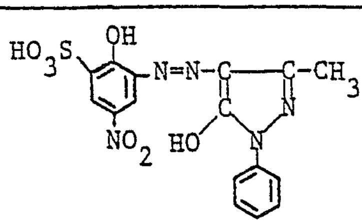 | Orange |

Weitere 1 : 1 Metallkomplexfarbstoffe sind in der Tabelle D aufgeführt.

Tabelle D

| I | II | III |
|---|---|---|
| Bsp. Nr. | Farbstoff | Farbton |
| 23 | 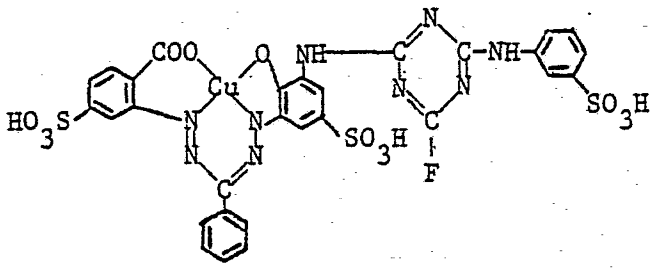 | Blau |
| 24 | 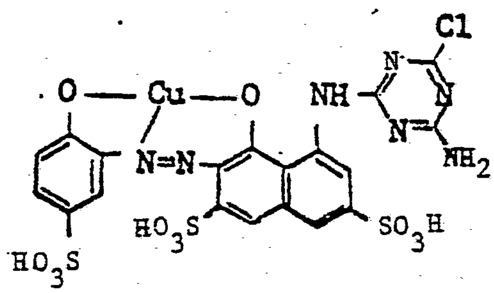 | Violett |
| 25 | 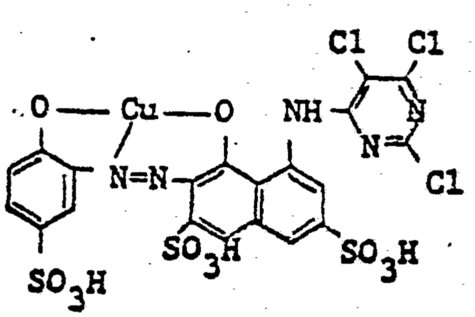 | Violett |

<u>Tabelle D</u> (Fortsetzung)

| I<br>Beisp Nr. | II<br>Farbstoff | III<br>Farbton |
|---|---|---|
| 26 | 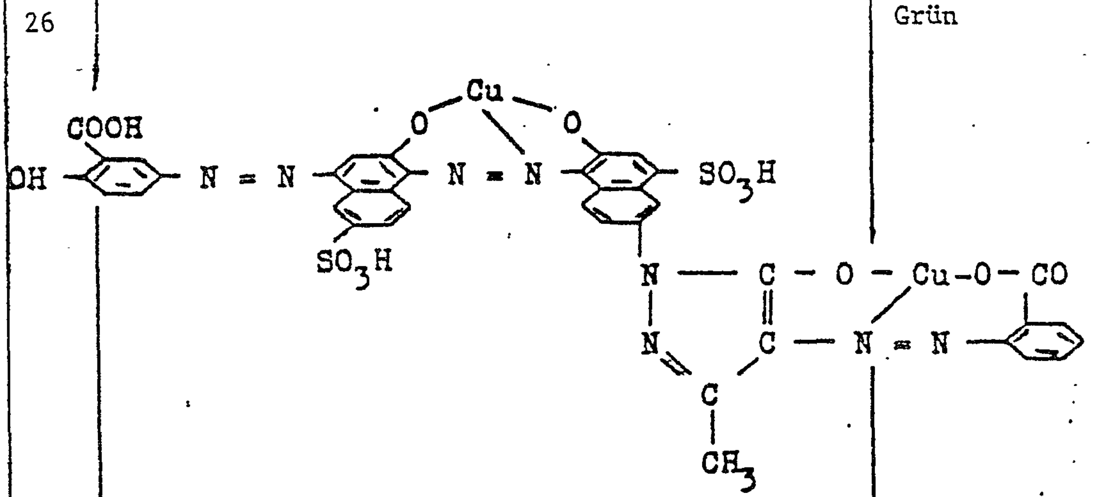 | Grün |
| 27 | 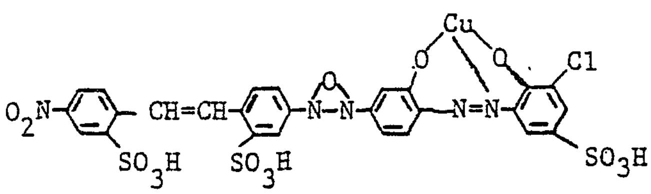 | Braun |
| 28 | 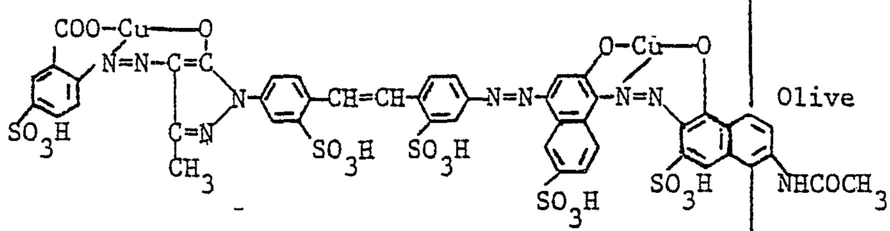 | Olive |
| 29 | 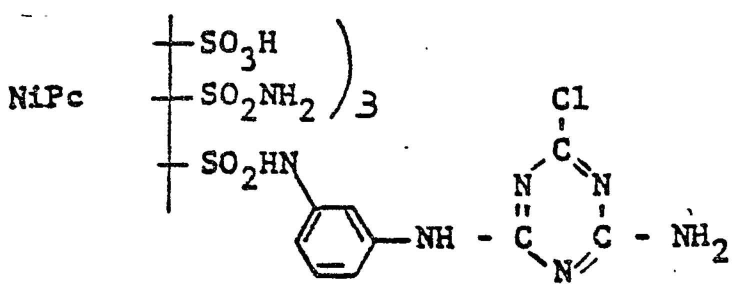 | Türkis |

Tabelle D (Fortsetzung)

| I | II | III |
|---|---|---|
| Bsp. Nr. | Farbstoff | Farbton |
| 30 | 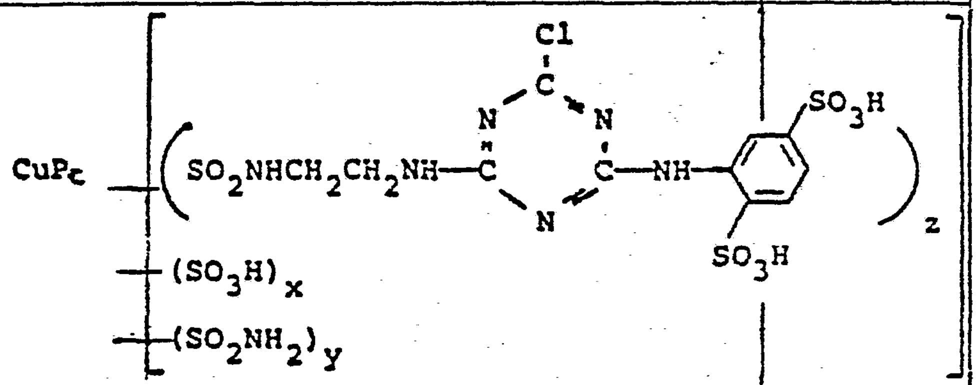 x+y+z = 4<br>z = 2-3 | Türkis |
| 31 | 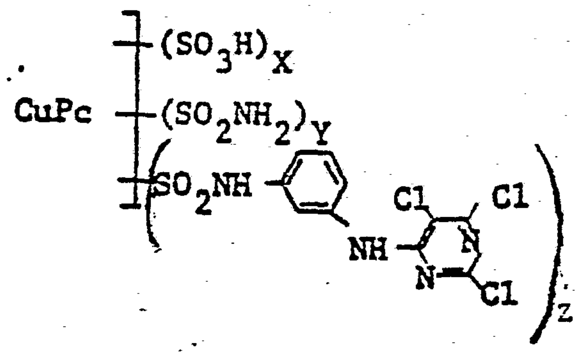 X+Y=3<br>Z=1 | Türkis |
| 32 | 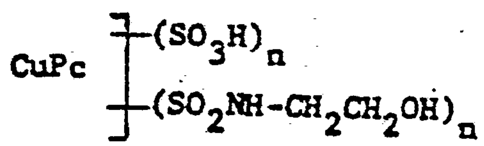 n=1-2 | Türkis |

Patentansprüche

1. Verfahren zur Herstellung von Granulaten von Metallkomplexfarbstoffen, dadurch gekennzeichnet, dass man eine wässrige Zubereitung, enthaltend

A) mindestens einen, eine Sulfonsäure- oder Carbonsäuregruppe enthaltenden, Metallkomplexfarbstoff, und

B) mindestens ein anionisches Tensid, nichtionogenes Tensid, Stärkeabbauprodukt und/oder ein anorganisches Salz aus der Gruppe der Ammonium- bzw. Alkali- und sauren Alkalisulfate, -carbonate, -phosphate, -nitrate oder Lithiumchlorid sowie gegebenenfalls weitere Zusätze auf ein Wirbelbett, enthaltend mindestens eine der Komponenten A, B oder der weiteren Zusätze sprüht.

2. Verfahren nach Anspruch 1, dadurch gekennzeichnet, dass man als weitere Zusätze mindestens ein hydrotropes Mittel, ein Staubbindmittel und/oder ein weiteres anorganisches bzw. organisches Salz verwendet.

3. Verfahren nach den Ansprüchen 1 und 2, dadurch gekennzeichnet, dass man als anionisches Tensid ein Kondensationsprodukt auf der Basis von Phenol-, Kresol- oder Napthol- bzw. Naphthalinsulfonsäure und Formaledhyd,oder ein Ligninsulfonat (Sulfit-Celluloseablauge) oder ein Oxyligninsulfonat verwendet.

4. Verfahren nach Anspruch 3, dadurch gekennzeichnet, dass man als anionisches Tensid ein Kondensationsprodukt auf der Basis von Naphthalinsulfonsäure und Formaldehyd verwendet.

5. Verfahren nach Ansprüchen 1 und 2, dadurch gekennzeichnet, dass man als nichtionogenes Tensid ein Kondensationsprodukt aus einer aliphatischen Fettsäure und 10 bis 30 Mol Aethylenoxid,

vorzugsweise aus Oelsäure und 20 Mol Aethylenoxid, verwendet.

6. Verfahren nach den Ansprüchen 1 bis 5, dadurch gekennzeichnet, dass man als Stärkeabbauprodukt eine Verbindung, die mindestens fünf Hydroxygruppen pro Molekül enthält, verwendet.

7. Verfahren nach Anspruch 6, dadurch gekennzeichnet, dass man als Stärkeabbauprodukt Sorbit, Hydratdextrose, Glukose, Milchzucker, Mannit, Mannose oder vorzugsweise Dextrin verwendet.

8. Verfahren nach den Ansprüchen 1 bis 7, dadurch gekennzeichnet, dass man als anorganisches Salz Lithiumchlorid, Natriumcarbonat, Natriumhydrogencarbonat, Mono-, Di- oder Trinatriumphosphat, Natriumtripolyphosphat, Polyphosphate, Natriumnitrat, Ammoniumsulfat, Kaliumsulfat, Lithiumsulfat, Natriumhydrogensulfat oder vorzugsweise Natriumsulfat verwendet.

9. Verfahren nach den Ansprüchen 1 und 2, dadurch gekennzeichnet, dass man als hydrotropes Mittel Harnstoff oder eine in der DE-OS 28 02 327 beschriebene Hilfsmittelmischung mit verstärkter Hydrotropiewirkung verwendet.

10. Verfahren nach den Ansprüchen 1 und 2, dadurch gekennzeichnet, dass man als Staubbindemittel ein Gemisch aus Mineralöl bzw. Mineralölsulfonsäure und einem Emulgator oder aus Paraffinöl und einem nichtionischem Emulgator verwendet.

11. Verfahren nach den Ansprüchen 1 und 2, dadurch gekennzeichnet, dass man als weiteres anorganisches Salz Natriumchlorid, oder als organisches Salz Natriumacetat verwendet.

12. Verfahren nach den Ansprüchen 1 und 2, dadurch gekennzeichnet, dass die Summe der Komponenten B und der weiteren Zusätze 5 bis 60 Gew.%, bezogen auf das Granulat, beträgt.

13. Verfahren nach den Ansprüchen 1 bis 12, dadurch gekennzeichnet, dass das anionische Tensid, nichtionogenes Tensid, Stärkeabbauprodukt und/oder anorganisches Salz aus der Gruppe der Ammonium- bzw. Alkali- und sauren Alkalisulfate, -carbonate, -phosphate, -nitrate oder Lithiumchlorid in Mengen von total 5 bis 50 Gew.%, bezogen auf das Granulat zugegeben wird.

14. Verfahren nach den Ansprüchen 1 bis 13, dadurch gekennzeichnet, dass die weiteren Zusätze in Gesamtmengen von 1 bis 50 Gew.%, bezogen auf das Granulat zugegeben werden.

15. Verfahren nach Anspruch 1, dadurch gekennzeichnet, dass man gleichzeitig mit der wässrigen Farbstoffzubereitung pulverförmige Zusätze in das Wirbelbett sprüht.

16. Verfahren nach Anspruch 1, dadurch gekennzeichnet, dass das Wirbelbett durch einen Gasstrom erzeugt wird, der eine Eingangstemperatur von 35 bis 300° C aufweist.

17. Verfahren nach Anspruch 1, dadurch gekennzeichnet, dass die Temperatur im Wirbelbett 50 bis 100° C beträgt.

18. Verfahren nach Anspruch 1, dadurch gekennzeichnet, dass man das Verfahren kontinuierlich durchführt und die formulierten Farbstoffteilchen, die einen Durchmesser grösser als 5 mm und kleiner als 0,1 mm aufweisen, gegebenenfalls nach Zerkleinerung direkt in die wässrige Zubereitung und/oder in das Wirbelbett zurückführt.

19. Die nach dem Verfahren gemäss den Ansprüchen 1 bis 18 erhaltenen Granulate von Metallkomplexfarbstoffen.

20. Granulate, gemäss Anspruch 19, enthaltend 35 bis 90 Gew.%, vorzugsweise 50 bis 90 Gew.% mindestens eines, eine Sulfonsäure- oder Carbonsäuregruppe enthaltenden Metallkomplexfarbstoffes, 5 bis

50 Gew.% eines anionischen Tensides, nichtionogenen Tensides, Stärkeabbauproduktes, und/oder eines anorganischen Salzes der Gruppe der Ammonium- bzw. Alkali- und sauren Alkalisulfate, -carbonate, -phosphate, -nitrate, oder Lithiumchlorid, gegebenenfalls 1 bis 50 Gew.% weitere Zusätze sowie Restfeuchte.